# EUROPEAN PATENT SPECIFICATION

(11) **EP 3 209 548 B1**
(45) Date of publication and mention of the grant of the patent: **25.09.2019**
(21) Application number: 15805255.5
(22) Date of filing: 20.10.2015
(51) Int. Cl.: B63B 35/28, F03D 1/00, B63B 35/00, B63B 21/50

(54) **METHOD FOR TRANSPORTING A BUOYANT STRUCTURE WITH A VESSEL, AND THE VESSEL ASSOCIATED WITH THE METHOD**
VERFAHREN ZUM TRANSPORT EINER STRUKTUR MIT AUFTRIEB AUF WASSER MIT EINEM SCHIFF UND IN DIESEM VERFAHREN ANGEWANDTES SCHIFF
PROCÉDÉ DE TRANSPORT D'UNE STRUCTURE PRÉSENTANT UNE FLOTTABILITÉ SUR L'EAU À L'AIDE D'UN NAVIRE ET NAVIRE APPLIQUÉ DANS LE PROCÉDÉ

(30) Priority: 20.10.2014 BE 201405020
(43) Date of publication of application: 30.08.2017
(73) Proprietor: GeoSea NV, 2070 Zwijndrecht (BE)
(72) Inventor: MAGRO YUDEGO, Javier, 2000 Antwerpen (BE); VANDERHEGGEN, Kayo, NL-3039 SJ Rotterdam (NL); RABAUT, Dieter, B9000 Gent (BE)
(74) Representative: Brouwer, Hendrik Rogier
(86) International application number: PCT/IB2015/058062
(87) International publication number: WO 2016/063210

(56) References cited:
- EP-A1- 2 495 162
- WO-A1-2011/071385
- WO-A1-2014/057156
- DE-A1-102008 046 359
- KR-A- 20120 033 854
- KR-B1- 101 236 940
- US-A1- 2012 183 359

## Description

### FIELD OF THE INVENTION

The invention relates to a method for transporting a structure with buoyancy over water using a vessel. The invention likewise relates to a vessel applied in the method. The invention more particularly relates to a method and vessel for transporting a floating (foundation of a) wind turbine over water.

### BACKGROUND KNOWLEDGE

A number of methods are applied for offshore erection of structures. In a known method modules or components of the structure to be erected are transported to the offshore location, after which the structure is erected on site according to a determined construction sequence. The erection of a structure at sea requires a large amount of equipment and personnel and takes a great deal of time, especially when operations regularly have to be interrupted because of rough weather. A considerable number of vessels is further necessary for transport of the modules or components, which makes this method costly.

Another known method comprises of transporting the structure in parts on a vessel, after which the structure is assembled and erected on site and then lifted and lowered onto the seabed from crane vessels. In this method it is also necessary to employ a plurality of vessels which have to work together in precise manner, which is very difficult in severe weather.

US 2012/0183359 A1 discloses a method for transporting a structure with buoyancy over water using a vessel having specially designed spud poles. Lower ends of the spud are provided with a locking system that cooperates with a locking system provided on an upper surface of the structure.

In the device disclosed in EP 2495162 A1, a structure is connected to a bottom side of a catamaran-type vessel by cables. The cables connect into holes provided in an upper surface of the structure to be transported.

WO 2014/057156 A1 discloses a vessel for transporting a large structure, such as a windmill. A bottom side of the vessel is profiled such that a foundation foot of the structure can engage with the profile.

An object of the present invention comprises of providing a method and corresponding vessel for transporting a structure with buoyancy over water and installing the structure on site, wherein the above stated drawbacks are at least partially obviated or at least reduced.

### BRIEF DESCRIPTION OF THE INVENTION

A method according to the invention has for this purpose the features according to claim 1. Also provided for this purpose is a vessel in accordance with claim 11. Provided according to the invention is a method for transporting a structure with buoyancy over water using a vessel, wherein a support surface on an upper side of the structure is brought into contact with a support surface on an underside of the vessel and the two support surfaces are coupled by shearing forces, wherein in a situation in which it is coupled to the vessel the structure is transported by movement of the vessel.

According to the invention, the structure can be configured to have buoyancy or can be provided with buoyancy for the purpose of the invention. Structures intended to have buoyancy for instance comprise tension leg platforms, floating (foundations for) wind turbines and the like. A tension leg platform or floating wind turbine generally comprises a hollow floating body which provides the buoyancy. The shear forces can for instance be generated by the buoyancy of the structure. The buoyancy can be increased by filling the cavity or cavities with a medium of lower density than the surrounding water, for instance air, while the buoyancy can be reduced by partially filling the cavity or cavities if desired with a medium with at least the same density as the surrounding water, for instance water. During use the floating body of a tension leg platform or floating wind turbine is brought to the desired depth in stable state and anchored to the underwater bottom by means of anchor lines. A work deck or other useful part of the tension leg platform or floating wind turbine usually protrudes above the water level here.

A simple manner of providing a structure to be transported with buoyancy comprises of adding one or more hollow floating bodies to the structure. Such floating bodies can be rigid bodies such as hollow caissons, but can also comprise flexible bodies such as for instance hollow balloons.

According to the invention the two support surfaces are coupled by shear forces which are optionally generated by the buoyancy of the structure and which are sufficiently great to carry the structure along with the vessel in a situation in which it is thus coupled to the vessel. So as to develop sufficiently great shear forces the buoyancy of the structure preferably exerts upward forces on the vessel. Greater upward forces can for instance be achieved by carrying (parts of) the structure further below the water level or carrying the structure substantially wholly below the water level. In another embodiment the magnitude of the shear forces is influenced by providing the vessel with a lifting device with which the structure can be pulled up against an underside of the vessel, as will be further elucidated.

With the method according to the invention a structure can be transported over sea and installed at sea in the fewest possible offshore operations. The method can be applied to install foundations, towers, nacelles and wind turbines as a whole. Another application of the invention comprises of placing installations for energy generation at sea, such as for instance hydro-turbines, but also offshore constructions in the wider sense of hydraulic engineering, and installations.

An embodiment of the invention provides a method wherein the support surface of the structure is brought to a lower level than the support surface of the vessel by reducing the buoyancy of the structure, and the support surface of the structure is subsequently brought into contact with the support surface of the vessel by placing the two support surfaces one below the other and increasing the buoyancy of the structure. In order to couple the structure to the vessel the buoyancy of the structure is further increased, whereby the two support surfaces approach each other in vertical direction and finally make contact. It is also possible to reduce the buoyancy of the vessel. A lifting device can further be provided for coupling purposes.

The invention has the advantage, among others, that no purpose-built vessels have to be employed to transport a structure. A further advantage of the method according to the invention is provided by an embodiment wherein the magnitude of the shear forces between the support surfaces is adjusted by reducing or increasing the buoyancy of the structure. It hereby becomes possible to adjust the strength of the coupling between vessel and structure as desired, for instance subject to the conditions and/or the characteristics of the structure and/or vessel.

The buoyancy of the structure can be adjusted in all ways known to the skilled person. An embodiment of the method wherein the buoyancy of the structure is reduced or increased by respectively providing the structure with ballast or removing ballast therefrom provides an easily applicable solution. The ballast can take a solid form, for instance concrete structures, but is preferably formed by a mass of water supplied to or discharged from a cavity of a hollow floating body of the structure.

The support surfaces can in principle comprise any component of the structure and/or vessel. The invention comprises a method wherein the support surface of the vessel is formed by a number of shearing profiles and/or friction strips arranged on an underside of the bottom of the vessel. In a further embodiment these shearing profiles and/or friction strips co-act with a number of shearing profiles and/or friction strips arranged on an upper side of the structure. It is thus possible for instance for the shearing profiles of the vessel and those of the structure to comprise mutually engaging male and female profiles.

The friction strips influence the magnitude of the shear forces between the support surfaces and in an embodiment comprise a friction-influencing material. It is also possible for one or more separate friction-influencing material layers to be arranged between the two support surfaces. A combination of the two embodiments is also possible. A friction-influencing material is understood to mean a material which changes the friction between two surfaces of ship steel. The friction-influencing material layers influence the friction between the two support surfaces such that the shear forces are on the one hand made greater than the shear forces which would exist between two ship steel support surfaces under the same conditions. The friction-influencing material layers on the other hand preferably reduce the risk of damage to for instance the support surfaces.

Particularly suitable friction-influencing materials comprise in an embodiment wood and/or a plastic, preferably rubber.

In another embodiment of the method the structure comprises a hollow floating body, of which a wall part, preferably an upper wall part, comprises the support surface of the structure. Upper wall part is understood to mean a wall part which is located higher (at lesser water depth) than a hollow space of the floating body. In this embodiment the upper wall part of the structure is brought into contact with a higher bottom part of the vessel and the two support surfaces are coupled by shear forces which are generated by the buoyancy of the structure.

Although the method according to the invention can be applied for transport over water of any floating structure, the method is particularly suitable for transporting over water a structure comprising a tension leg platform, preferably a floating wind turbine or foundation for a wind turbine.

In an embodiment the invention particularly provides a method wherein the structure comprises a centrally disposed hollow floating body and at least three legs which extend radially outward from a lower outer end of the floating body and upper surfaces of which form the support surface. It has been found that, particularly for a structure according to this embodiment, the vessel provides an increased stability during transport of the structure. The stability against tipping over can be increased further by providing an embodiment wherein the structure comprises at least four, and still more preferably at least five legs extending radially outward from the floating body. An upper side of the legs is preferably provided with shearing profiles and/or friction strips.

The invention likewise relates to a vessel for transporting over water a structure with buoyancy, such as for instance a floating foundation of a wind turbine. Provided according to the invention is a vessel in accordance with claim 11, wherein a support surface of the structure to be transported is brought into contact on an upper side of the support surface with an underside of a support surface of the vessel, and the two support surfaces are coupled by shear forces generated by the buoyancy of the structure.

Provided in an embodiment is a vessel which further comprises means for adjusting the magnitude of the shear forces between the support surfaces. The means for adjusting the magnitude of the shear forces preferably comprise means for adjusting the buoyancy of the coupled structure, for instance means for respectively providing the structure with ballast or removing ballast therefrom.

According to the invention the support surface of the vessel is formed by a number of shearing profiles and/or friction strips arranged on an underside of the bottom of the vessel. The shearing profiles and/or friction strips are preferably connected releasably to the underside of the bottom, such as for instance by weld and/or bolt connections. Such an embodiment allows simple modification of a vessel for other purposes.

Suitable friction strips comprise strips of wood and/or a plastic, preferably rubber.

In order to further support the structure during transport thereof and, if desired, to influence the shear forces, the vessel comprises in an embodiment a lifting device which comprises traction cables connected on one side to the structure and on another side to the vessel, for instance by means of winches, and which is configured to hold the structure in place against the vessel. The lifting device is able to pull the structure with the lifting device to variable extent against the support surface of the vessel, whereby the friction forces between structure and vessel are influenced.

The vessel is suitable for transporting any structure, but is particularly suitable for transporting a structure comprising a central elongate floating body and at least three legs which extend radially outward from a lower outer end of the floating body and upper surfaces of which form the support surface. Such a structure can for instance comprise a tension leg platform or a floating (foundation of a) wind turbine.

The vessel to which the structure according to the invention is coupled by means of shear forces can comprise any vessel suitable for the purpose. In an embodiment of the invention the vessel comprises a recess which is open toward the water and flanked by hull parts and configured to receive at least a part of the structure, wherein lower surfaces of the hull parts form the support surface of the vessel.

Because the vessel according to the invention comprises a recess which is flanked on either side by a hull part and in which at least a part of the structure can be received, it is achieved that the vessel can transport a relatively great load. This further enhances the load-bearing capacity of the vessel, whereby it becomes possible to transport loads of 5000-6000 tons and more.

The present invention provides a vessel and method which is practicable and efficient for safe, environmentally-friendly and cost-effective installation of wind turbines or other offshore installations as a whole. In an embodiment the vessel is suitable for transport and installation of a wind turbine with a dry weight of 2500 tons and more. The water depth at the location of installation can vary within wide limits here, wherein depths of between 4 and 20 metres, but also deeper, can be reached without problem.

Provided in a further aspect of the invention is a vessel which comprises a pontoon or an assembly of coupled pontoons. Such a vessel can be transported in relatively simple manner and still acquire considerable dimensions, whereby the advantages of the invention become particularly manifest.

### DESCRIPTION OF THE FIGURES

The vessel and the method according to the invention will now be further elucidated on the basis of the description of the accompanying figures, without otherwise being limited thereto. In the figures:
figure 1 is a rear view of a vessel according to an embodiment of the invention and a floating wind turbine coupled to the vessel;
figure 2 is a side view of a vessel according to the embodiment of the invention shown in figure 1 and a floating wind turbine coupled to the vessel;
figure 3 is a side view of another embodiment of the vessel according to the invention with a floating wind turbine coupled thereto;
figure 4 is a top view of the embodiment of the vessel according to the invention shown in figure 3;
figure 5 is a partial rear view of the embodiment of the vessel according to the invention shown in figure 3;
figure 6 is a top view of yet another embodiment of the vessel according to the invention with a floating wind turbine coupled thereto;
figure 7 is a detail view of the coupling according to the embodiment of figure 6;
figure 8 is a top view of yet another embodiment of the vessel according to the invention with a floating wind turbine coupled thereto; and
figure 9 is a detail view of the coupling according to the embodiment of figure 8.

### DETAILED DESCRIPTION OF EMBODIMENTS

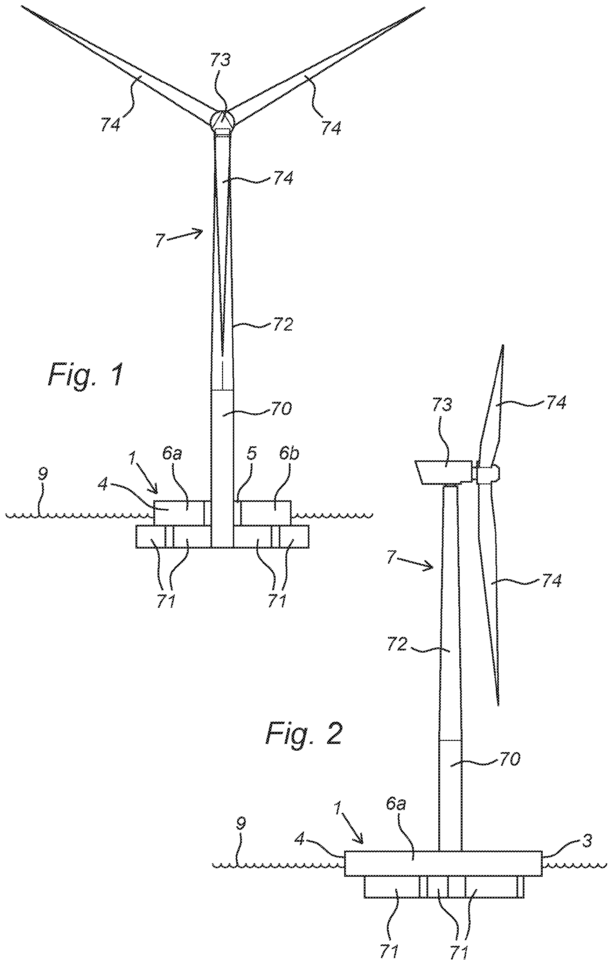

A vessel 1 for transporting a floating wind turbine 7 over water is shown with reference to figures 1 and 2. Wind turbine 7 comprises a central elongate floating body 70 and five legs 71 extending radially outward from a lower outer end of floating body 70. Situated on top of floating body 70 is a wind turbine mast 72, a top part of which is provided with a hub or nacelle 73 to which a number of blades 74 are connected. According to the invention wind turbine 7 is transported in the assembled situation shown in figures 1 and 2. It is however also possible that components are absent. Such a floating wind turbine 7 is transported to a suitable installation position and there submerged to a depth at which floating body 70 is partially under water. The submersion can for instance take place by reducing the buoyancy of wind turbine 7. Wind turbine 7 is connected in the desired position to the underwater bottom by arranging traction cables (not shown) running between legs 71 and anchors (not shown) arranged in the underwater bottom.

Floating body 70 of wind turbine 7 is provided with one or more cavities which are filled with a medium lighter than seawater. Wind turbine 7 hereby has buoyancy. It is also possible to provide (only) legs 71 with hollow spaces. The coupling between vessel 1 and wind turbine 7 is brought about by bringing a support surface of the wind turbine 7 to be transported into contact on an upper side thereof with an underside of a support surface of the bottom of vessel 1. The two support surfaces are coupled here by shear forces which are generated by the buoyancy of wind turbine 7, as will be further elucidated hereinbelow.

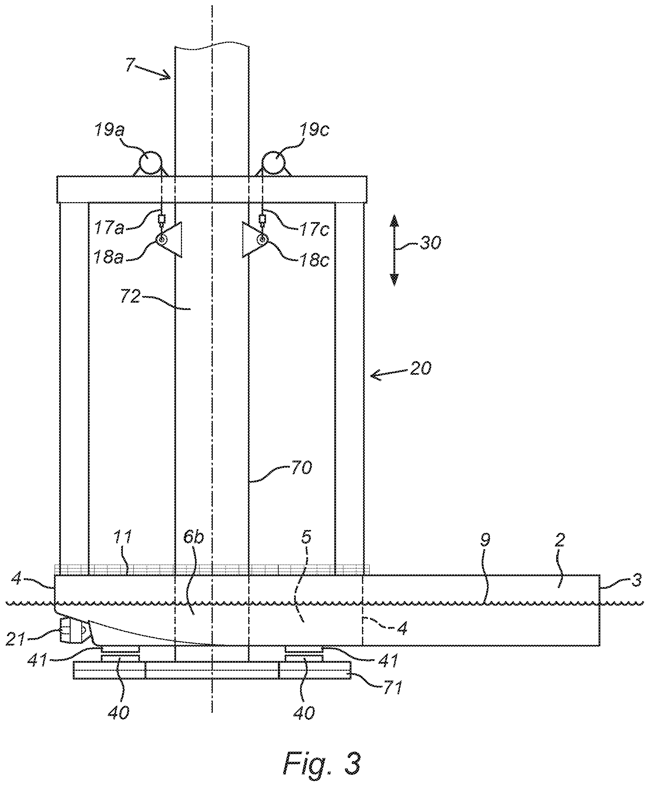

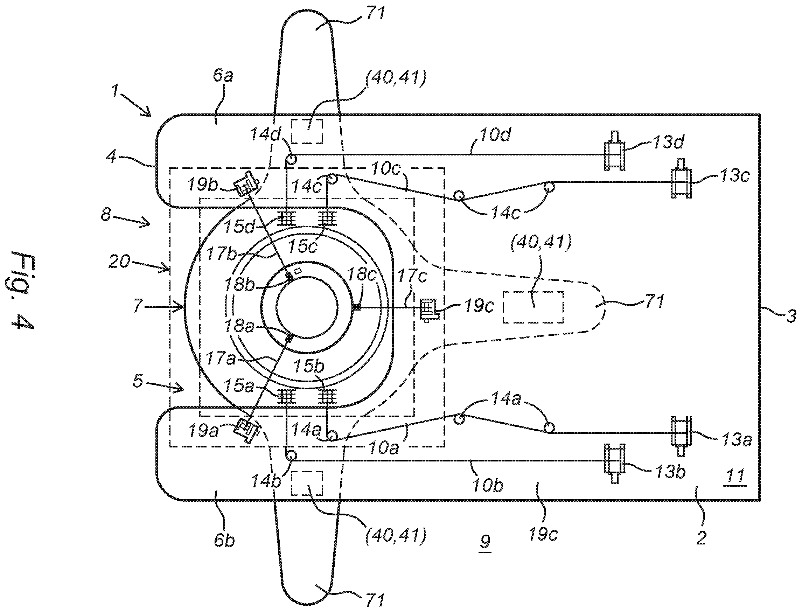

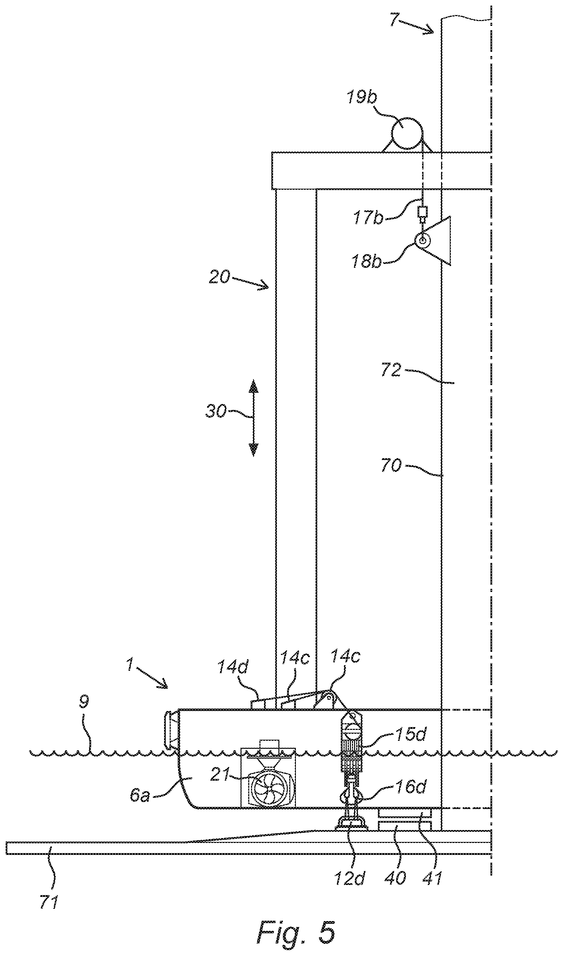

Referring to figures 3-5 (in which only a part of wind turbine 7 is shown), according to an embodiment of the present invention a vessel 1 comprises a hull 2 provided with a bow part 3, and a recess 5 located at the position of stern 4 of vessel 1 and flanked by two hull parts (6a, 6b) on respectively port side and starboard side. The two hull parts (6a, 6b) keep clear a passage 8 accessible to the wind turbine 7 to be transported, through which wind turbine 7 can be carried in erected state between hull parts (6a, 6b). Recess 5 is bottomless and open toward sea level 9, and forms a so-called moon pool. In the erected state of wind turbine 7 the floating body 70 and wind turbine mast 72 extend substantially in a vertical direction 30.

In the shown embodiment vessel 1 is further provided with a lifting device configured to hold the structure in position in vertical direction 30 (during transport) or move it up and downward (for instance during loading of the structure or during installation thereof on the seabed). In the shown embodiment the lifting device comprises traction cables (10a, 10b, 10c, 10d) which are connectable on one side to the structure by means of lifting eyes (12a, 12b, 12c, 12d) arranged on the base of the wind turbine foundation 7 and on another side to vessel 1, more particularly to deck 11 of vessel 1, for instance by means of winches (13a, 13b, 13c, 13d). Winches (13a, 13b, 13c, 13d) are optionally provided with a braking device, have for instance a diameter of 1.1 m and are for instance each able to pull a load of 900 tons. It will be apparent that these characteristics are given solely by way of example and that other characteristics are possible, winches (13a, 13b, 13c, 13d) are for instance anchored to work deck 11 at positions lying between recess 5 and bow 3.

A number of guide means (14a, 14b, 14c, 14d) for traction cables (10a, 10b, 10c, 10d), for instance in the form of capstans or pulleys, are further provided on work deck 11. In order to connect traction cables (10a, 10b, 10c, 10d) to wind turbine 7 the connecting end of each traction cable (10a, 10b, 10c, 10d) comprises a hoisting block (15a, 15b, 15c, 15d) and a hoist (16a, 16b, 16c, 16d) which can co-act with lifting eyes (12a, 12b, 12c, 12d). In coupled situation hoists (16a, 16b, 16c, 16d) are moved in the direction of the seabed under the weight of wind turbine 7 by paying out the winches (13a, 13b, 13c, 13d). At least a part of wind turbine 7, and particularly floating body 70 and legs 71, can hereby be held under water. Traction cables (10a, 10b, 10c, 10d) can be tightened with winches (13a, 13b, 13c, 13d), whereby hoists (16a, 16b, 16c, 16d) and wind turbine 7 are moved in the direction of the bottom of vessel 1, wherein a support surface of wind turbine 7 is brought into contact on an upper side thereof with a support surface of the bottom of vessel 1, and the two support surfaces are coupled by shear forces which are generated by the buoyancy of the wind turbine. In a situation in which it is coupled to vessel 1 wind turbine 7 can thus be transported by movement of vessel 1.

Vessel 1 can further be provided with lifting means, for instance in the form of a gantry crane 20 disposed at the position of stern 4 of vessel 1. Upper beams of gantry crane 20 are provided with winches (19a, 19b, 19c, 19d) which are connected by means of traction cables (17a, 17b, 17c, 17d) to tension anchors (18a, 18b, 18c, 18d) attached to wind turbine 7.

Vessel 1 can further be provided if desired with propellers 21, although in another embodiment vessel 1 is not self-propelling and vessel 1 has to be moved by another vessel.

Accommodating a wind turbine 7 in vessel 1 can for instance take place by delivering wind turbine 7 at a quay wall in (substantially) fully assembled state. Vessel 1 is moored with recess 5 facing toward the quay wall, after which the wind turbine foundation 7 is placed in erected state in recess 5 using gantry crane 20. Another option comprises of arranging the wind turbine foundation 7 afloat in the water and navigating wind turbine 7 into recess 5, for which purpose traction cables (10a, 10b, 10c, 10d) can be used, and subsequently erecting wind turbine 7 by means of gantry crane 20. A support surface in the form of a friction strip 40 arranged on an upper side of a leg 71 of wind turbine 7 is brought to a lower level here than a support surface in the form of a friction strip 41 arranged on an underside of the vessel bottom by reducing the buoyancy of wind turbine 7, and the two friction strips (40, 41) are then brought into mutual contact by once again increasing the buoyancy of wind turbine 7. The magnitude of the shear forces between the support surfaces is adjusted by decreasing or increasing the buoyancy of wind turbine 7, for instance by respectively providing the cavities of floating body 70 with ballast or removing ballast therefrom, and/or by tightening traction cables (10a, 10b, 10c, 10d & 17). Suitable ballast for instance comprises surrounding water. Wind turbine 7 is hereby fixed in the erected state. In this position the wind turbine foundation 7 can be transported to an offshore location.

Once the vessel has arrived at the desired location, it is carried with recess 5 above the position designated for foundation 7 and held in this position, for instance by lowering spud poles onto/into the seabed. By paying out traction cables (10a, 10b, 10c, 10d) the wind turbine foundation 7 is then lowered onto the seabed, where it is anchored to the bottom in a manner known to the skilled person.

Once the vessel has arrived at the desired location it is carried with recess 5 above the position designated for foundation 7 and held in this position, for instance by lowering the spud poles onto/into the seabed. By paying out winches (19a, 19b, 19c) the foundation is then lowered onto the seabed by means of traction cables (17a, 17b, 17c) and the tension anchors (18a, 18b, 18c) attached to the foundation. In an embodiment the tension anchors are at a higher position than the centre of gravity of the foundation in order to guarantee stability during the operation.

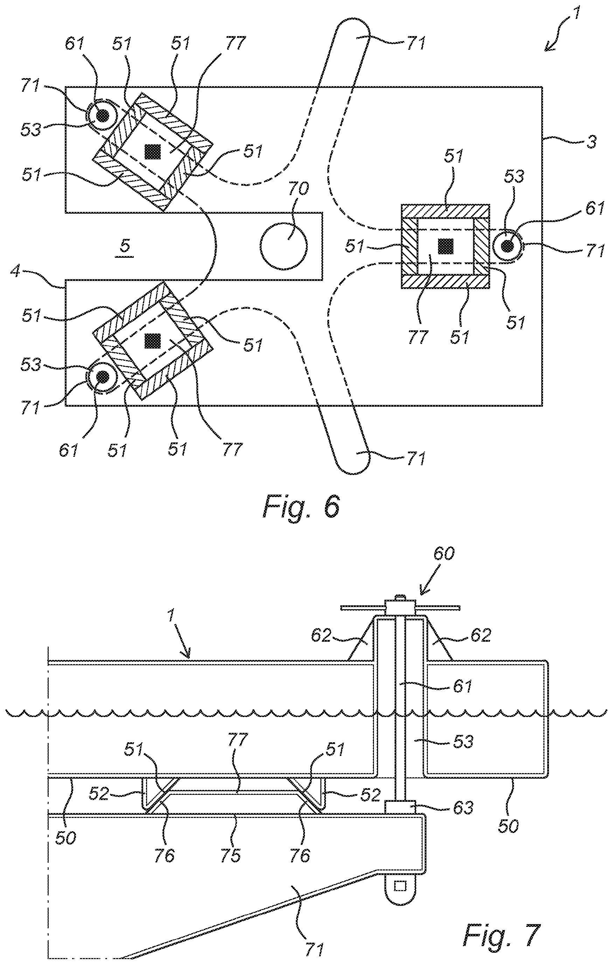

Another embodiment of the invention is shown with reference to figures 6 and 7. In this embodiment the support surface of vessel 1 is formed by a number of plate-like steel shearing profiles 51 arranged on an underside of bottom 50 of vessel 1 and together forming a number of squares, as shown in top view in figure 6. It is not essential for shearing profiles 51 to be arranged in a square, and any other configuration is likewise possible, for instance shearing profiles 51 mounted in parallel. Shearing profiles 51 run at an angle other than zero so that forces are transferred via shearing, and are supported by vertically running support plates 52 which are welded fixedly to bottom 50. An upper side 75 of a wind turbine leg 71 is likewise provided with shearing profiles 76 which are welded on their upper side to a cover plate 77 and form a square box. Shearing profiles (51, 76) are nested into each other when a leg 71 moves upward, whereby a shear coupling is realized between a wind turbine 7 and vessel 1. The shear forces are generated here by the buoyancy of wind turbine 7.

According to figure 7, vessel 1 can if desired comprise pull rods 61 which can be tensioned with a twist-lock coupling 60. Pull rods 61 run from the deck of the vessel, through moon pools 53 arranged in the deck to a position under bottom 50 of vessel 1. A pull rod 61 is connected on one side (the underside) by means of twist-lock 63 to the wind turbine, more particularly to an outer end of a leg 71 of wind turbine 7, and on another side (the upper side) to vessel 1 by means of connecting plates 62. The wind turbine is further held against the underside of vessel 1 by tightening pull rod 61.

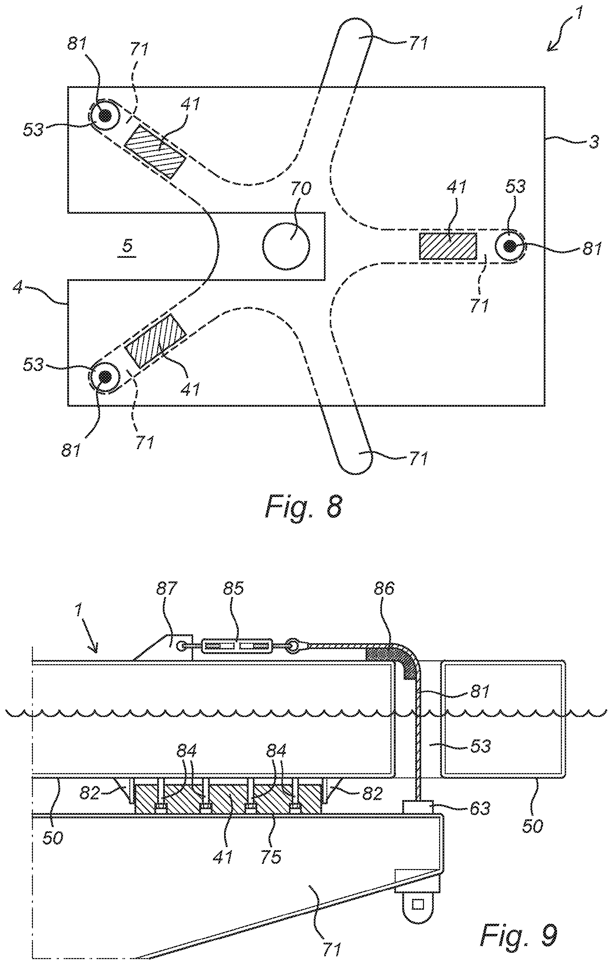

Yet another embodiment of the invention is shown with reference to figures 8 and 9. In this embodiment the support surface of vessel 1 is formed by a number of friction strips 41 arranged on an underside of bottom 50 of vessel 1 and together forming a number of rectangular support surfaces 41, as shown in top view in figure 8. The rubber friction strips 41 are supported at edges by vertically running support plates 82 welded fixedly to bottom 50. The friction strips run substantially horizontally, whereby forces are transferred via shearing. In this embodiment an upper side 75 of a wind turbine leg 71 need not be provided with shearing profiles or other coupling means. Friction strips 41 are fixed to bottom 50 of the vessel by means of a number of recessed bolts 84, although a different manner of connection is also possible. When a leg 71 moves upward friction strips 41 come into contact with an upper side of leg 71, whereby a shear coupling is realized between a wind turbine 7 and vessel 1. The shear forces are generated here by the buoyancy of wind turbine 7.

According to figure 9, vessel 1 can if desired comprise traction cables 81 which can be tensioned with a winch or with the shown tensioner 85. Traction cables 81 run from the deck of vessel 1 over guide blocks 86 through moon pools 53 arranged in the deck to a position under bottom 50 of vessel 1. A traction cable 81 is connected on one side (the underside) by means of twist-lock 63 to the wind turbine, more particularly to an outer end of a leg 71 of wind turbine 7, and on another side (the upper side) to vessel 1 by means of a support frame 87. Wind turbine 7 is held against the underside of vessel 1 by tightening traction cable 81, together with the upward directed buoyant forces.

The invention is not limited to the above described embodiments, and modifications could be made thereto to the extent these ensue in self-evident manner from the appended claims. Although the invention is particularly suitable for transport and installation of a wind turbine (foundation), it can also be applied for other slender structures which have to be placed at sea, such as for instance parts of oil platforms or wind turbines themselves.

## Claims

1. Method for transporting a structure with buoyancy over water using a vessel (1), wherein a support surface (40) on an upper side of the structure is brought into contact with a support surface (41) on an underside of the vessel (1), **characterized in that** a vessel (1) in accordance with any one of claims 11-14 is provided, and **in that** the two support surfaces (40, 41) are coupled by shear forces, wherein, in a situation in which the structure is coupled to the vessel (1) the structure is transported by movement of the vessel (1).

2. Method as claimed in claim 1, wherein the support surface of the structure is brought to a lower level than the support surface of the vessel by reducing the buoyancy of the structure, and the support surface of the structure is subsequently brought into contact with the support surface of the vessel by placing the two support surfaces one below the other and increasing the buoyancy of the structure.

3. Method as claimed in either of the foregoing claims, wherein the magnitude of the shear forces between the support surfaces is adjusted by reducing or increasing the buoyancy of the structure, for instance by respectively providing the structure with ballast or removing ballast therefrom.

4. Method as claimed in any of the foregoing claims, wherein the support surface of the structure is formed by a number of shearing profiles and/or friction strips arranged on the upper side of the structure.

5. Method as claimed in any one of the preceding claims, wherein the friction strips comprise wood and/or a plastic such as rubber.

6. Method as claimed in any of the foregoing claims, wherein the structure is pulled with a lifting device to variable extent against the support surface of the vessel, whereby the friction forces between structure and vessel are influenced, wherein the lifting device preferably comprises traction cables connected on one side to the structure and on another side to the vessel, for instance by means of winches.

7. Method as claimed in any of the foregoing claims, wherein the structure comprises a central elongate floating body and at least three legs which extend radially outward from a lower outer end of the floating body and upper surfaces of which form the support surface.

8. Method as claimed in any of the foregoing claims, wherein the structure comprises a tension leg platform, preferably a floating foundation of a wind turbine.

9. Method as claimed in any of the foregoing claims, wherein the structure is lowered in the direction of the underwater bottom at an installation position by reducing the buoyancy of the structure, and the structure is connected to the underwater bottom.

10. Method as claimed in claim 9, wherein the vessel comprises support means and the structure is supported by the support means during lowering.

11. Vessel (1) for transporting over water a structure with buoyancy, such as for instance a floating foundation of a wind turbine (7), wherein a support surface of the structure to be transported is brought into contact on an upper side of the support surface (40) with an underside of a support surface (41) of the vessel (1), **characterized in that** the support surface (41) of the vessel (1) is formed by a number of shearing profiles and/or friction strips (41) arranged on the bottom of the vessel (1) such that the two support surfaces (40, 41) are coupled by shear forces.

12. Vessel as claimed in claim 11, further comprising means for adjusting the magnitude of the shear forces between the support surfaces.

13. Vessel as claimed in claim 12, wherein the means for adjusting the magnitude of the shear forces comprise means for adjusting the buoyancy of the coupled structure, for instance means for respectively providing the structure with ballast or removing ballast therefrom.

14. Vessel as claimed in any of the claims 11-13, wherein the support surface of the structure is formed by a number of shearing profiles and/or friction strips arranged on the upper side of the structure.

15. Vessel as claimed in any of the claims 11-14, wherein the friction strips comprise wood and/or a plastic such as rubber.

16. Vessel as claimed in any of the claims 11-15, comprising a lifting device with which the structure can be pulled to variable extent against the support surface of the vessel, whereby the friction forces between structure and vessel are influenced, wherein the lifting device preferably comprises traction cables which are connected on one side to the structure and on another side to the vessel, for instance by means of winches, and which are configured to hold the structure in place against the vessel and to move the structure in vertical direction.

## Patentansprüche

1. Verfahren zum Transportieren einer Struktur mit Auftrieb über Wasser mithilfe eines Schiffes (1), wobei eine Tragfläche (40) auf einer Oberseite der Struktur mit einer Tragfläche (41) auf einer Unterseite des Schiffes (1) in Kontakt gebracht wird, **dadurch gekennzeichnet, dass** ein Schiff (1) nach einem der Ansprüche 11 bis 14 bereitgestellt wird, und dass die beiden Tragflächen (40, 41) durch Scherkräfte verbunden sind, wobei in einer Situation, in der die Struktur mit dem Schiff (1) verbunden ist, die Struktur durch die Bewegung des Schiffes (1) transportiert wird.

2. Verfahren nach Anspruch 1, wobei die Tragfläche der Struktur auf ein niedrigeres Niveau als die Tragfläche des Schiffes gebracht wird, indem der Auftrieb der Struktur verringert wird, und die Tragfläche der Struktur anschließend mit der Tragfläche des Schiffes in Kontakt gebracht wird, indem die beiden Tragflächen untereinander platziert werden und der Auftrieb der Struktur erhöht wird.

3. Verfahren nach einem der vorherigen Ansprüche, wobei die Größenordnung der Scherkräfte zwischen den Tragflächen eingestellt wird, indem der Auftrieb der Struktur verringert oder erhöht wird, z.B. dadurch, dass die Struktur mit Ballast versehen oder Ballast von der Struktur entfernt wird.

4. Verfahren nach einem der vorherigen Ansprüche, wobei die Tragfläche der Struktur von einer Reihe von Scherprofilen und/oder Friktionsbändern gebildet wird, die auf der Oberseite der Struktur angeordnet sind.

5. Verfahren nach einem der vorherigen Ansprüche, wobei die Friktionsbänder Holz und/oder einen Kunststoff wie beispielsweise Gummi aufweisen.

6. Verfahren nach einem der vorherigen Ansprüche, wobei die Struktur mit einer Hebeeinheit variabel verlängert gegen die Tragfläche des Schiffes gezogen wird, wodurch die Reibungskräfte zwischen Struktur und Schiff beeinflusst werden, wobei die Hebeeinheit vorzugsweise Zugseile aufweist, die auf einer Seite mit der Struktur und auf einer anderen Seite mit dem Schiff verbunden sind, zum Beispiel über Winden.

7. Verfahren nach einem der vorherigen Ansprüche, wobei die Struktur einen zentralen, länglichen Schwimmkörper und mindestens drei Beine aufweist, die sich von einem unteren äußeren Ende des Schwimmkörpers radial nach außen erstrecken und deren obere Oberflächen die Tragfläche bilden.

8. Verfahren nach einem der vorherigen Ansprüche, wobei die Struktur eine Spannbeinplattform, vorzugsweise ein schwimmendes Fundament einer Windkraftanlage, aufweist.

9. Verfahren nach einem der vorherigen Ansprüche, wobei die Struktur in Richtung des Unterwasserbodens an einer Einbauposition abgesenkt wird, indem der Auftrieb der Struktur verringert wird, und die Struktur mit dem Unterwasserboden verbunden wird.

10. Verfahren nach Anspruch 9, wobei das Schiff ein Tragmittel aufweist und die Struktur während des Absenkens von dem Tragmittel getragen wird.

11. Schiff (1) zum Transportieren einer Struktur mit Auftrieb über Wasser, wie beispielsweise eines schwimmenden Fundaments einer Windkraftanlage (7), wobei eine Tragfläche der zu transportierenden Struktur auf einer Oberseite der Tragfläche (40) mit einer Unterseite einer Tragfläche (41) des Schiffes (1) in Kontakt gebracht wird, **dadurch gekennzeichnet, dass** die Tragfläche (41) des Schiffes (1) von einer Reihe von Scherprofilen und/oder Friktionsbänder (41) gebildet wird, die auf der Unterseite des Schiffes (1) so angeordnet sind, dass die beiden Tragflächen (40, 41) durch Scherkräfte verbunden sind.

12. Schiff nach Anspruch 11, das ferner ein Mittel zum Einstellen der Größenordnung der Scherkräfte zwischen den Tragflächen aufweist.

13. Schiff nach Anspruch 12, wobei das Mittel zum Einstellen der Größenordnung der Scherkräfte ein Mittel zum Einstellen des Auftriebs der verbundenen Struktur aufweist, beispielsweise ein Mittel zum Versehen der Struktur mit Ballast bzw. zum Entfernen von Ballast von der Struktur.

14. Schiff nach einem der Ansprüche 11 bis 13, wobei die Tragfläche der Struktur von einer Reihe von Scherprofilen und/oder Friktionsbändern gebildet wird, die auf der Oberseite der Struktur angeordnet sind.

15. Schiff nach einem der Ansprüche 11 bis 14, wobei die Friktionsbänder Holz und/oder einen Kunststoff wie beispielsweise Gummi aufweisen.

16. Schiff nach einem der Ansprüche 11 bis 15, das eine Hebeeinheit aufweist, mit der die Struktur variabel verlängert gegen die Tragfläche des Schiffes gezogen werden kann, wodurch die Reibungskräfte zwischen Struktur und Schiff beeinflusst werden, wobei die Hebeeinheit vorzugsweise Zugseile aufweist, die auf einer Seite mit der Struktur und auf einer anderen Seite mit dem Schiff verbunden sind, beispielsweise durch Winden, und die so konfiguriert sind, dass sie die Struktur an dem Schiff festhalten und die Struktur in vertikaler Richtung bewegen.

## Revendications

1. Procédé permettant de transporter une structure dotée de flottabilité sur l'eau en utilisant un navire (1), étant entendu que l'on met une surface de support (40), située sur une face supérieure de la structure, en contact avec une surface de support (41), située sur une face inférieure du navire (1), **caractérisé en ce qu'**un navire (1) selon l'une quelconque des revendications 11-14 est prévu et **en ce que** les deux surfaces de support (40, 41) sont couplées par des efforts de cisaillement, étant entendu que, dans une situation dans laquelle la structure est couplée au navire (1), la structure est transportée par le déplacement du navire (1).

2. Procédé selon la revendication 1, étant entendu que l'on amène la surface de support de la structure à un niveau plus bas que la surface de support du navire en réduisant la flottabilité de la structure et que l'on met ensuite la surface de support de la structure en contact avec la surface de support du navire en plaçant les deux surfaces de support l'une en dessous de l'autre et en augmentant la flottabilité de la structure.

3. Procédé selon l'une quelconque des deux revendications précédentes, étant entendu que l'on adapte l'intensité des efforts de cisaillement entre les surfaces de support en réduisant ou en augmentant la flottabilité de la structure, par exemple, respectivement, en dotant la structure d'un ballast ou en en retirant le ballast.

4. Procédé selon l'une quelconque des revendications précédentes, étant entendu que la surface de support de la structure est faite d'un certain nombre de profilés de cisaillement et/ou de bandes de frottement agencé(e)s sur la face supérieure de la structure.

5. Procédé selon l'une quelconque des revendications précédentes, étant entendu que les bandes de frottement sont constituées de bois et/ou d'un plastique tel que le caoutchouc.

6. Procédé selon l'une quelconque des revendications précédentes, étant entendu que l'on tire la structure avec un dispositif de levage dans une mesure variable contre la surface de support du navire, moyennant quoi l'on influence les forces de frottement entre la structure et le navire, étant entendu que le dispositif de levage comprend de préférence des câbles de traction reliés, d'un côté, à la structure et, de l'autre côté, au navire, au moyen de treuils par exemple.

7. Procédé selon l'une quelconque des revendications précédentes, étant entendu que la structure comprend un corps flottant central allongé et au moins trois branches qui s'étendent, dans le plan radial, vers l'extérieur depuis une extrémité extérieure inférieure du corps flottant et dont les surfaces supérieures forment la surface de support.

8. Procédé selon l'une quelconque des revendications précédentes, étant entendu que la structure comprend une plate-forme à lignes tendues, de préférence la fondation flottante d'une turbine éolienne.

9. Procédé selon l'une quelconque des revendications précédentes, étant entendu que l'on fait descendre la structure en direction du fond subaquatique en une position d'installation en réduisant la flottabilité de la structure et que l'on relie la structure au fond subaquatique.

10. Procédé selon la revendication 9, étant entendu que le navire comprend un moyen de support et que la structure est supportée par le moyen de support pendant sa descente.

11. Navire (1) permettant de transporter sur l'eau une structure dotée de flottabilité telle que, par exemple, la fondation flottante d'une turbine éolienne (7), étant entendu que l'on met une surface de support de la structure à transporter en contact, par une face supérieure de la surface de support (40), avec une face inférieure d'une surface de support (41) du navire (1), **caractérisé en ce que** la surface de support (41) du navire (1) est faite d'un certain nombre de profilés de cisaillement et/ou de bandes de frottement (41) agencé(e)s sur le fond du navire (1) de telle sorte que les deux surfaces de support (40, 41) soient couplées par des efforts de cisaillement.

12. Navire selon la revendication 11, comprenant par ailleurs des moyens d'adapter l'intensité des efforts de cisaillement entre les surfaces de support.

13. Navire selon la revendication 12, étant entendu que les moyens d'adapter l'intensité des efforts de cisaillement consistent en moyens d'adapter la flottabilité de la structure couplée, par exemple des moyens servant, respectivement, à doter la structure d'un ballast ou à en retirer le ballast.

14. Navire selon l'une quelconque des revendications 11-13, étant entendu que la surface de support de la structure est faite d'un certain nombre de profilés de cisaillement et/ou de bandes de frottement agencé(e)s sur la face supérieure de la structure.

15. Navire selon l'une quelconque des revendications 11-14, étant entendu que les bandes de frottement sont constituées de bois et/ou d'un plastique tel que le caoutchouc.

16. Navire selon l'une quelconque des revendications 11-15, comprenant un dispositif de levage avec lequel on peut tirer la structure dans une mesure variable contre la surface de support du navire, moyennant quoi l'on influence les forces de frottement entre la structure et le navire, étant entendu que le dispositif de levage comprend de préférence des câbles de traction qui sont reliés, d'un côté, à la structure et, de l'autre côté, au navire, au moyen de treuils par exemple, et qui sont configurés pour maintenir la structure à sa place contre le navire et pour déplacer la structure dans le sens vertical.
